# EUROPEAN PATENT APPLICATION

(11) **EP 4 471 357 A1**
(43) Date of publication of application: **04.12.2024**
(21) Application number: 23176447.3
(22) Date of filing: 31.05.2023
(51) Int. Cl.: F25B 41/20, F25B 47/02, F25B 49/02

(54) **A VAPOUR-COMPRESSION CIRCUIT**

(71) Applicant: Thermo King LLC, Minneapolis, MN 55420 (US)
(72) Inventor: DOUDA, Jiri, 28541 Malesov (CZ); HOUDEK, Pavel, 28401 Kutna Hora (CZ)
(74) Representative: Haseltine Lake Kempner LLP

(57) **Abstract**

The present disclosure relates to a vapour-compression circuit 400, 400' for circulating a working fluid. The vapour-compression circuit 400, 400' comprises a compressor 402, a first heat exchanger 404, an expansion device 406, 406', a second heat exchanger 408, a discharge line 412, a bypass line 419, 419' and a controller 490. The discharge line 412 extends from an outlet of the compressor 402 to an inlet of the first heat exchanger 404. The vapour-compression circuit 400, 400' is configured to operate in a heating mode 620 in which the first heat exchanger 404 operates as a condenser and the second heat exchanger 408 operates as an evaporator. The vapour-compression circuit 400, 400' is also configured to operate in a defrost mode 610 in which the working fluid is directed 612 from the compressor 402 to the second heat exchanger 408 via the bypass line 419, 419' and the expansion device 406, 406', the bypass line 419, 419' extending from the discharge line 412 to bypass the first heat exchanger 404.

## Description

### FIELD OF THE INVENTION

The present disclosure relates to a vapour-compression circuit having a bypass line for a defrost mode. The present disclosure also relates to a transport refrigeration unit (TRU) and a vehicle comprising such a vapour-compression circuit.

### BACKGROUND OF THE INVENTION

Known vapour-compression circuits may comprise a compressor, a first heat exchanger (e.g., a condenser), an expansion device and a second heat exchanger (e.g., an evaporator). Operation of known vapour-compression circuits (e.g., refrigeration circuits and/or heating circuits) to accept heat from air at the evaporator may result in ice formation on the surfaces of the evaporator. Ice formation on the evaporator is associated with various drawbacks, including a reduced efficiency of a vapour-compression circuit.

It is known to remove ice from an evaporator of a vapour-compression circuit by operating the vapour-compression circuit in a defrost mode. The defrost mode may include causing relatively hot gaseous refrigerant to flow from the compressor to the evaporator (e.g., directly or otherwise bypassing the condenser). Heat energy from the relatively hot working fluid is then transferred to the ice on the surfaces of evaporator, causing the ice to melt and/or drop off the surfaces of the evaporator. However, this may also result in the relatively hot gaseous refrigerant condensing to form a relatively cool liquid-state refrigerant, or a mixture of gaseous and liquid-state refrigerant. The relatively cool liquid refrigerant may then re-enter the compressor. Liquid-state refrigerant entering the compressor is associated with increased compressor wear, reduced compressor reliability and shortened compressor lifetime due to dilution of compressor lubricating oil by the liquid-state refrigerant within the compressor. Additionally, a large amount of liquid-state refrigerant entering the compressor may lead to sudden and/or immediate compressor failure.

It is desirable to provide an improved vapour-compression circuit and/or an improved defrost mode which mitigate(s) and/or overcome(s) these technical challenges.

### BRIEF SUMMARY OF THE INVENTION

According to a first aspect, there is provided a vapour-compression circuit According to a first aspect there is provided a vapour-compression circuit for circulating a working fluid, the vapour-compression circuit comprising a compressor, a first heat exchanger, an expansion device, a second heat exchanger, a discharge line, a bypass line and a controller, wherein the discharge line extends from an outlet of the compressor to an inlet of the first heat exchanger; the vapour-compression circuit is configured to operate in a heating mode in which the first heat exchanger operates as a condenser and the second heat exchanger operates as an evaporator; and the vapour-compression circuit is configured to operate in a defrost mode in which the working fluid is directed from the compressor to the second heat exchanger via the bypass line and the expansion device, the bypass line extending from the discharge line to bypass the first heat exchanger.

By directing the working fluid from the compressor to the second heat exchanger via the bypass line, the expansion device is either part of or downstream of the bypass line. For example, the bypass line may either extend through (e.g., include), terminate upstream of, or terminate at the expansion device.

The controller may be configured to control the expansion device based on a superheat of working fluid discharged from the second heat exchanger in the defrost mode.

The vapour-compression circuit may comprise a suction line sensing arrangement configured to monitor a pressure and a temperature of working fluid in a suction line extending from the second heat exchanger to the compressor. The controller may be configured to determine the superheat of working fluid discharged from the second heat exchanger based on at least one signal received from the suction line sensing arrangement relating to a pressure and/or temperature of the working fluid.

The controller may be configured to control the expansion device to maintain the superheat of the working fluid discharged from the second heat exchanger within a target superheat range while operating the vapour-compression circuit in the defrost mode.

It may be that the second heat exchanger is exposed to an ambient environment and is configured to facilitate heat exchange between the ambient environment and working fluid circulated by the vapour-compression circuit.

It may be that the expansion device is a main expansion device and the vapour-compression circuit comprises a liquid line extending from the first heat exchanger to the main expansion device, and a distribution line extending from the main expansion device to an inlet of the second heat exchanger. The controller may be configured to control the main expansion device based on the superheat of working fluid discharged from the second heat exchanger in the heating mode.

Otherwise, it may be that the expansion device is an auxiliary expansion device and the vapour-compression circuit comprises a main expansion device, a liquid line extending from the first heat exchanger to the main expansion device, and a distribution line extending from the main expansion device to an inlet of the second heat exchanger. The controller may be configured to control the main expansion device based on the superheat of working fluid discharged from the second heat exchanger in the heating mode.

The controller may be configured to control circulation of working fluid within the vapour-compression circuit to selectively permit and prevent flow of working fluid through the bypass line.

It may be that the vapour-compression circuit may comprises a bypass line control valve. It may also be that the bypass line control valve is configured to control flow of working fluid through the bypass line; and the controller is configured to actuate the bypass line control valve to permit flow of working fluid through the bypass line for operation of the vapour-compression circuit in the defrost mode.

It may be that the vapour-compression circuit comprises a condenser control valve configured to prevent working fluid circulating along a path including the first heat exchanger in a closed state. The condenser control valve may be disposed at a location to permit circulation of working fluid along a path including the bypass line and the compressor when in the closed state.

It may be that the condenser control valve is located: on a liquid line extending from the first heat exchanger, on the discharge line between the bypass line and the inlet of the first heat exchanger, or within the first heat exchanger.

The controller may be configured to: maintain the condenser control valve in the closed state while operating the vapour-compression circuit in the defrost mode; maintain the condenser control valve in an open state while operating the vapour-compression circuit in the heating mode; and/or actuate the bypass line control valve to prevent flow of working fluid through the bypass line while operating the vapour-compression circuit in the heating mode.

The vapour-compression circuit may be configured such that a direction of flow of working fluid through the second heat exchanger is the same in both the defrost mode and the heating mode.

It may be that: the controller is configured to switch the vapour-compression circuit from the heating mode to the defrost mode; and the controller is configured to continuously operate the compressor to compress working fluid as the vapour-compression circuit is switched between the defrost mode and the heating mode.

The controller may be configured to terminate operation of the vapour-compression circuit in the defrost mode based on a signal received from a sensing arrangement relating to a temperature of working fluid discharged from an outlet of the second heat exchanger to an inlet of the compressor.

The controller may be configured to terminate operation of the vapour-compression circuit in the defrost mode when the signal is indicative of the temperature of working fluid discharged from the outlet of the second heat exchanger to the inlet of the compressor being at or above a temperature threshold. The temperature threshold may be between 15°C and 20°C.

According to a second aspect, there is provided a transport refrigeration unit (TRU) comprising a vapour-compression circuit in accordance with the first aspect.

According to a third aspect there is provided a vehicle comprising a vapour-compression circuit in accordance with the first aspect and/or a TRU in accordance with the second aspect. The vehicle may comprise a prime mover and the compressor may be mechanically coupled to the prime mover. In addition or instead, the vehicle may comprise an electric motor and the compressor may be mechanically coupled to the electric motor. The prime mover may be a heat engine such as an internal combustion engine.

### BRIEF DESCRIPTION OF THE DRAWINGS

**FIG. 1** shows a vehicle comprising a transport refrigeration system;
**FIG. 2** is a diagram which schematically shows a transport refrigeration unit suitable for use with the transport refrigeration system of FIG. 1, the transport refrigeration unit comprising a first example vapour-compression circuit being configured for operation in a defrost mode;
**FIG. 3** is a diagram which schematically shows a transport refrigeration unit suitable for use with the transport refrigeration system of FIG. 1, the transport refrigeration unit comprising the first example vapour-compression circuit being configured for operation in a heating mode;
**FIG. 4** is a diagram which schematically shows a transport refrigeration unit suitable for use with the transport refrigeration system of FIG. 1, the transport refrigeration unit comprising a second example vapour-compression circuit being configured for operation in a defrost mode;
**FIG. 5** is a diagram which schematically shows a transport refrigeration unit suitable for use with the transport refrigeration system of FIG. 1, the transport refrigeration unit comprising the second example vapour-compression circuit being configured for operation in a heating mode; and
**FIG. 6** is a flowchart which shows an example method of controlling a transport refrigeration unit comprising the first example vapour-compression circuit of FIGs. 2-3 or the second example vapour-compression circuit of FIGs. 4-5.

### DETAILED DESCRIPTION OF THE INVENTION

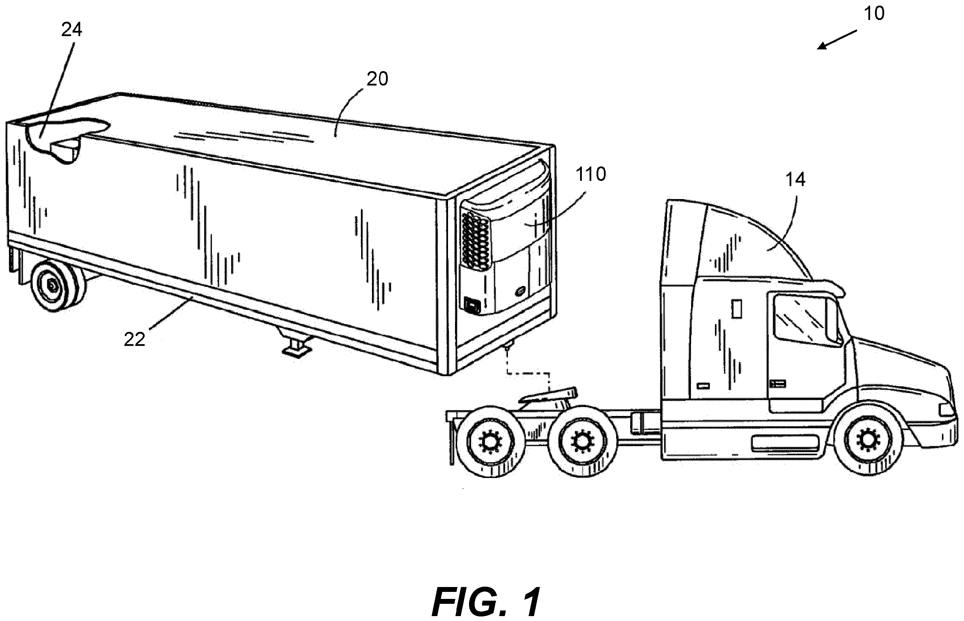

**FIG. 1** shows a vehicle 10 comprising a transport refrigeration system 20. In the example of FIG. 1, the transport refrigeration system 20 forms a part of an over-the-road refrigerated semi-trailer having a structure 22 supporting (or forming) at least one climate-controlled compartment 24 which is configured to be cooled and/or heated by a TRU 110. The structure 22 includes a chassis. The structure 22 supports the TRU 110. The vehicle 10 further comprises a tractor unit 14 removably couplable to the trailer. However, it should be noted that a TRU 110 as described herein is not limited to use with an over-the-road refrigerated semi-trailer. The TRU could configured for use with any other suitable type of vehicle or suitable part of a vehicle, such as a refrigerated truck, a refrigerated van, or refrigerated transport container which may be a reefer. Vapour-compression circuits as disclosed herein may also be implemented in non-TRU applications, such as for HVAC(R) systems.

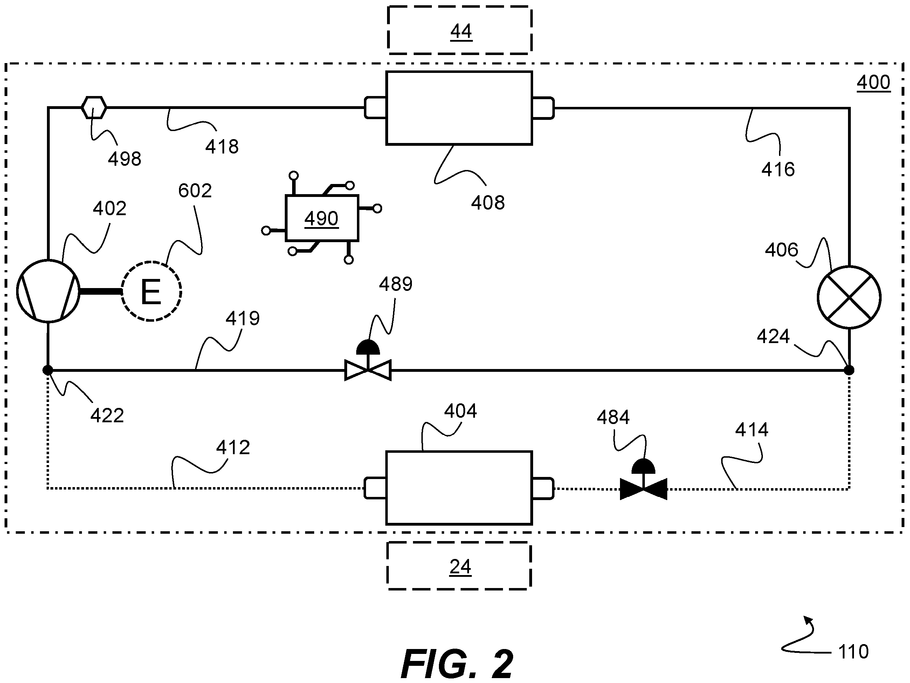

**FIGs. 2-3** schematically show a diagram of a first example refrigeration circuit 400 suitable for use with a TRU 110 (indicated schematically in the drawing) suitable for a vehicle and transport refrigeration system, such as the vehicle 10 and transport refrigeration system 20 of FIG. 1. The first example vapour-compression circuit 400 is for circulating a working fluid. The working fluid may include, for instance, a refrigerant. In use, the vapour-compression circuit 400 functions as a refrigeration circuit and/or as a heat pump. The first example vapour-compression circuit 400 comprises a compressor 402, a condenser 404, an expansion device 406 and an evaporator 408. The expressions "condenser" and "evaporator" refer to respective first and second heat exchangers, with the first heat exchanger (the condenser) being configured to function as a condenser in a mode in which heat is rejected at the first heat exchanger (e.g., in a heating mode when the first heat exchanger is configured for heat exchange with an ambient medium (e.g. outdoor air)), and the second heat exchanger being configured to function as an evaporator in a mode in which heat is absorbed at the second heat exchanger (e.g., the heating mode when the second heat exchanger is configured to heat exchange with air in a temperature-controlled space of the TRU). Such a mode is described below, although it is to be appreciated that various vapour compression circuits are reversible and/or may incorporate modes for directing working fluid along different paths, and as such the condenser (first heat exchanger) and evaporator (second heat exchanger) are not required to always function as condensers and evaporators, respectively, and may function as the opposite (i.e., condenser as evaporator, evaporator as condenser) in other modes, such as a reverse flow mode (e.g., a cooling mode). Each heat exchanger 404, 408 may be any suitable type of heat exchanger as known to those skilled in the art. However, in particular, each heat exchanger 404, 408 may be a fin-and-tube type heat exchanger.

A discharge line 412 extends from an outlet of the compressor 402 to an inlet of the condenser 404. A liquid line 414 extends from an outlet of the condenser 404 to an inlet of the expansion device 406, whereas a distributor line 416 extends from an outlet of the expansion device 406 to an inlet of the evaporator 408. A suction line 418 extends from an outlet of the evaporator 408 to an inlet of the compressor 402. A bypass line 419 extends from a junction 422 on the discharge line 412 (e.g., a discharge line junction 422) to a junction 424 on the liquid line 414 (e.g., a liquid line junction 424). The liquid line junction 424 is upstream of the expansion device 406 (e.g., with respect to a direction of flow extend from the outlet of the compressor to the inlet of the compressor). Therefore, the bypass line 419 extends from the discharge line 412 so that working fluid is provided to the evaporator 408 along a route that includes the expansion device 406. In this particular example, the bypass line 419 bypasses the condenser 404 and terminates upstream of the expansion device 406. However, in other examples, the bypass line 419 may extend from the discharge line 412, bypass the condenser 404, and terminate at the inlet of the expansion device 406, or an expansion device may be included along the bypass line as will be further discussed below.

The condenser 404 is configured for heat exchange between the climate-controlled compartment 24 (e.g., the climate-controlled compartment 24 of the vehicle 10 of FIG. 1) and working fluid circulated by the vapour-compression circuit 400. In particular, the condenser 404 is configured to reject heat from working fluid circulated by the vapour-compression circuit 400 into the climate-controlled compartment 24 when the vapour-compression circuit 400 is operating in the heating mode. To this end, the condenser 404 is in thermal communication with (e.g., is exposed to) the climate-controlled compartment 24.

The evaporator 408 is configured for heat exchange with an ambient environment 44, for example external air. The evaporator 408 is configured for heat exchange between the ambient environment 44 and working fluid circulated by the vapour-compression circuit 400. More specifically, the evaporator 408 is configured to transfer heat from the ambient environment 44 into working fluid circulated by the vapour-compression circuit 400 when the vapour-compression circuit 400 is operating in the heating mode. For this purpose, the evaporator 408 is in thermal communication with (e.g., is exposed to) the ambient environment 44.

The first example vapour-compression circuit 400 also comprises a controller 490. The controller 490 may include a processor and/or a memory (incorporating instructions to cause the controller to operate the vapour-compression circuit as disclosed herein, upon execution by a processor), as will be appreciated by those of ordinary skill in the art. The controller 490 is generally configured to control the vapour-compression circuit 400.

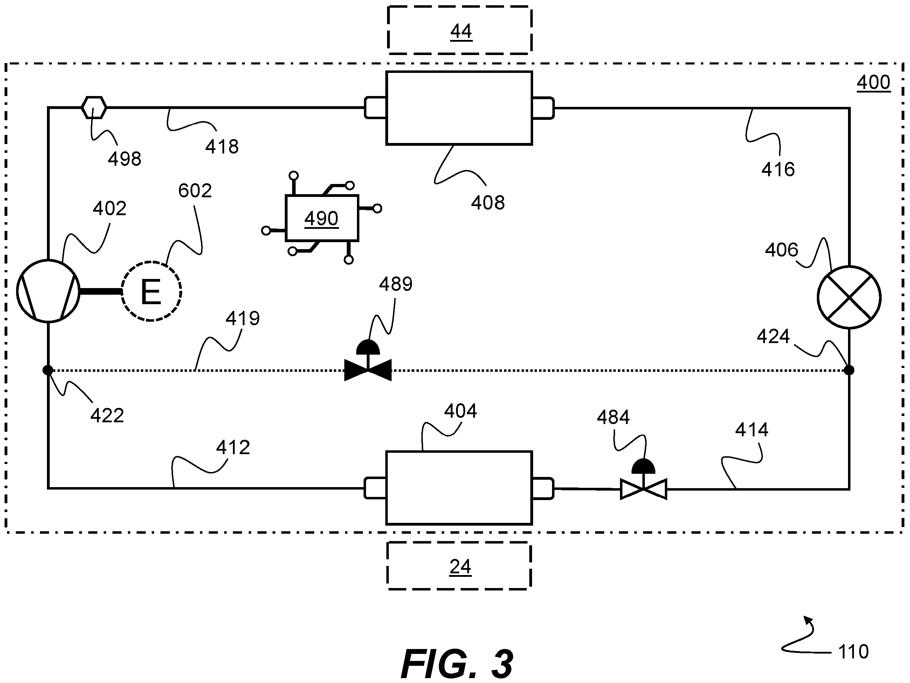

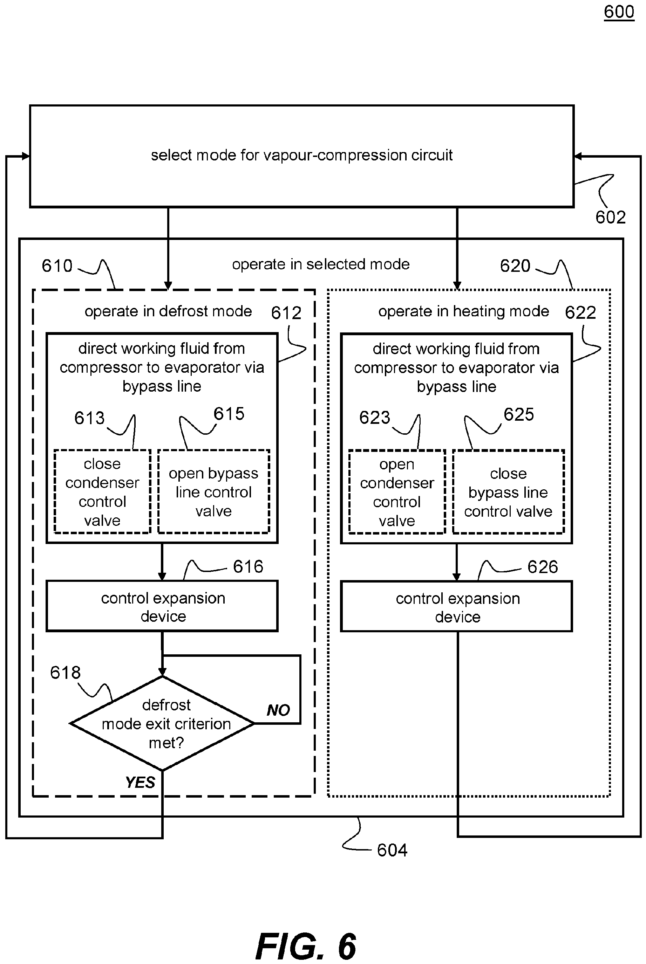

The controller 490 is configured to selectively operate the first example first-vapour compression circuit 400 in the heating mode and in a defrost mode (i.e., to select/switch between operating in these modes). In FIG. 2, the first example vapour-compression circuit 400 is configured for operation in the defrost mode. On the other hand, in FIG. 3, the first example vapour-compression circuit 400 is configured for operation in the heating mode. The controller 490 may be configured to operate the vapour compression circuit 400 (or the TRU 110) in accordance with the example method described below with reference to FIG. 6.

The first example vapour-compression circuit 400 further comprises a suction line sensing arrangement 498 which is configured to monitor a pressure and a temperature of working fluid in the suction line 418. The suction line sensing arrangement 498 may comprise any suitable temperature and pressure transducers for monitoring the temperature and pressure of working fluid in the suction line 418. The controller 490 is configured to receive at least one signal from the suction line sensing arrangement 498, the at least one signal being indicative of (e.g., relating to) the pressure and/or the temperature of working fluid in the suction line 418, or a derived parameter (for example a superheat of the working fluid).

The controller 490 may be configured to determine the temperature of working fluid discharged from the evaporator 408 based on a signal received from the suction line sensing arrangement 498, with the signal relating to the temperature of the working fluid. In addition or instead, the controller 490 may be configured to determine the superheat of working fluid discharged from the evaporator 408 based on two signals received from the suction line sensing arrangement 498, with one signal relating to the pressure of the working fluid and the other signal relating to the temperature of the working fluid. Such a calculation may also be based on or incorporate determination of the saturation temperature of the working fluid as a function of the pressure of the working fluid. The saturation temperature of the working fluid may be accessed by the controller 490 from an internal or external memory, which may store a lookup table, database or relationship (e.g., equation or formula) which correlates the saturation temperature of the working fluid to the pressure of the working fluid

The controller 490 is configured to control circulation of working fluid within the vapour-compression circuit 400 to selectively permit and prevent flow of working fluid through the bypass line 419. For this purpose, the vapour-compression circuit 400 comprises a bypass line control valve 489 which is configured to control flow of working fluid through the bypass line 419. The bypass line control valve 489 is operable in at least a closed state and an open state. The bypass line control valve 489 is configured to (and disposed at a location to) prevent working fluid flowing through the bypass line 419 when in the closed state. Conversely, the bypass line control valve 489 is configured to (and disposed at a location so as to) permit flow of working fluid through the bypass line 419 when in the open state. For this purpose, in the example of FIGs. 2-3, the bypass line control valve 489 is disposed along the bypass line 419. However, in other examples the bypass line control valve 489 may be disposed at either end of the bypass line 419 (e.g., at the discharge line junction 422 or at the liquid line junction 424).

The bypass line control valve 489 being in the open state is indicated by the bypass line control valve 489 being shown as outline-drawn in FIG.2, and the ability of working fluid to flow along the relevant path including at least the condenser 404 is indicated by the solid line in FIG. 2. The bypass line control valve 489 being in the closed state is indicated by the bypass line control valve 489 being shown as solid-filled in FIG.3, and the inability of working fluid to flow along the relevant path including at least the condenser 404 is indicated by the dotted line in FIG. 3.

The controller 490 is configured to control circulation of working fluid within the vapour-compression circuit 400 to selectively prevent working fluid circulating along a path including the condenser 404. To this end, the vapour-compression circuit 400 comprises a condenser control valve 484 which is configured to control flow of working fluid through a bypassed portion of the vapour-compression circuit, bypassed by the bypass line 419. In this example, this includes a bypassed portion of the discharge line 412 and a bypassed portion of the liquid line 414, extending between the respective junctions with the bypass line 419. The condenser control valve 484 is operable in at least a closed state and an open state. The condenser control valve 484 is configured to (and disposed at a location to) prevent working fluid circulating along a path including at least the condenser 404 when in the closed state. In other words, when in the closed state, the condenser control valve 484 prevents flow of working fluid through the condenser 404. The condenser control valve 484 is disposed at a location to permit (e.g., not to prevent or directly restrict) circulation of working fluid along a path including the compressor 402 and the bypass line 419 when in the closed state. The condenser control valve 484 is disposed at a location to permit working fluid flow along the path including the condenser 404 when in the open state. To this end, in the example of FIGs. 2-3, the condenser control valve 484 is disposed at a point along the liquid line 414 between the outlet of the condenser 404 and the bypass line 419. Nevertheless, in other examples, the condenser control valve 484 may be disposed at either end of the liquid line 414, along on the discharge line 412 between the bypass line 419 and the inlet of the condenser 404, or within (e.g., inside) the condenser 404.

The condenser control valve 484 being in the closed state is indicated by the condenser control valve 484 being shown as solid-filled in FIG. 2, and the inability of working fluid to flow along the relevant path including at least the condenser 404 is indicated by the dotted line in FIG. 2. The condenser control valve 484 being in the open state is indicated by the condenser control valve 484 being shown as outline-drawn in FIG. 3, and the ability of working fluid to flow along the relevant path including at least the condenser 404 is indicated by the solid line in FIG. 3.

The first example vapour-compression circuit 400 may be provided to (that is, disposed in or supported by) a vehicle 10 (e.g., as shown in FIG. 1) comprising a prime mover 602. The prime mover 602 may generally be a heat engine such as an internal combustion engine (for example, a diesel-cycle internal combustion engine). If so, the compressor 402 may be mechanically coupled to the prime mover 602 so that the compressor 402 is configured to be driven by the prime mover 602 for the purpose of compressing working fluid in the suction line 418. The prime mover 602 is indicated in FIGs. 2-3 in dashed lines to indicate that it powers the compressor, albeit it is to be appreciated that it may not be considered to form part of the vapour compression circuit 400.

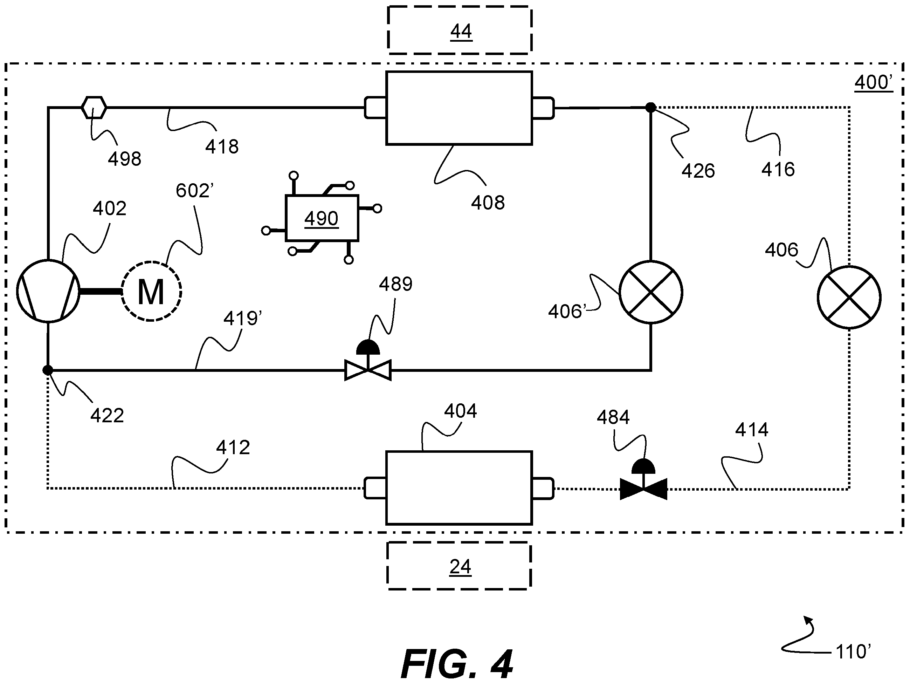

**FIGs. 4-5** schematically show a diagram of a second example TRU 110' suitable for use within the vehicle 10 and the transport refrigeration system 20 of FIG. 1. The second example TRU 110' comprises a second example vapour-compression circuit 400'. The second vapour-compression circuit 400' is generally similar to the first example vapour-compression circuit 400 described above with respect to FIGs. 2-3, with like reference numerals denoting common or similar features.

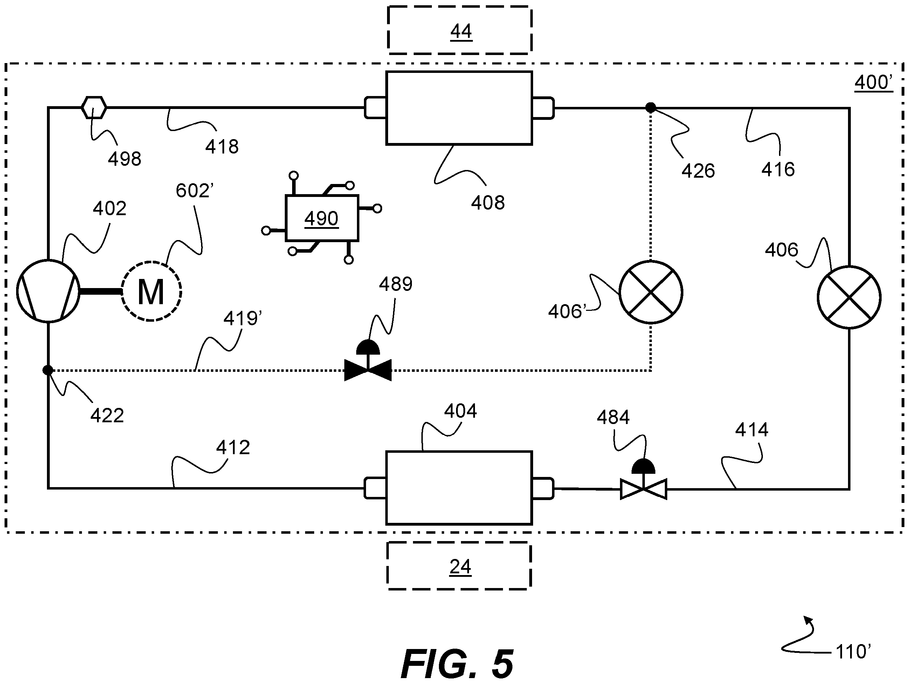

In a similar way to that described above with respect to the first example vapour-compression circuit 400 of FIGs. 2-3, the controller 490 of the second example vapour-compression circuit 400' is configured to selectively operate the second example first-vapour compression circuit 400' in the defrost mode and in the heating mode. In FIG. 4, the second example vapour-compression circuit 400' is configured for operation in the defrost mode. On the other hand, in FIG. 5, the second example vapour-compression circuit 400' is configured for operation in the heating mode.

In contrast to the first example vapour-compression circuit 400 of FIGs. 2-3, the second example vapour-compression circuit 400 comprises an auxiliary expansion device 406' along the bypass line. The expansion device 406 between the liquid line 414 and distributor line 416 is referred to as a main expansion device 406. In further contrast to the first example vapour-compression circuit 400 of FIGs. 2-3, the bypass line 419' extends from the discharge line junction 422 to a junction 426 on the distributor line 416 (e.g., a distributor line junction 426). The bypass line 419' extends through the auxiliary expansion device 406', and may be considered to include the auxiliary expansion device 406'.

The second example vapour-compression circuit 400' may be provided to (that is, disposed in or supported by) a vehicle 10 (see FIG. 1) comprising an electric motor 602'. If so, the compressor 402 may be mechanically coupled to the electric motor 602' so that the compressor 402 is configured to be driven by the electric motor 602' for the purpose of compressing working fluid in the suction line 418. The electric motor 602' is indicated in FIGs. 4-5 in dashed lines, albeit it is to be appreciated that it may not form part of the vapour compression circuit 400' as such. In some examples, the electric motor 602' is disposed inside a housing of the compressor 402. In other examples, the electric motor 602' is disposed outside a housing of the compressor 402.

Although the compressor 402 has been described as being mechanically coupled to a prime mover 602 with respect to the first example vapour-compression circuit 400 and being mechanically coupled to an electric motor with respect to the second example vapour-compression circuit 400', it should be understood that the compressor 402 being mechanically coupled to either the prime mover or the electric motor is not functionally linked to the other features of either the first example vapour-compression circuit 400 or the second example vapour-compression circuit 400'. This disclosure anticipates that the compressor 402 of either the first example vapour-compression circuit 400 or the second example vapour-compression circuit 400' may be mechanically coupled to a prime mover and/or an electric motor as described above.

FIG. 6 is a flowchart which shows an example method 600 of operating a TRU 110, 100' comprising a vapour-compression circuit in accordance with the first example vapour-compression circuit 400 or the second example vapour-compression circuit 400'.

The method 600 includes an action of selecting (at block 602) a mode for the vapour-compression circuit 400, 400'. After the mode is selected (at block 602), the method 600 includes operating (at block 604) the vapour-compression circuit 400, 400' in the selected mode, as described in further detail below.

In the example of FIG. 6, the action of selecting (at block 602) the mode for the vapour-compression circuit 400, 400' includes selecting from the defrost mode and the heating mode. If the defrost mode is selected for the vapour-compression circuit 400, the method 600 continues to a process of operating (at block 610) the vapour-compression circuit 400 in the defrost mode. On the other hand, if the heating mode is selected for the vapour-compression circuit 400, the method 600 continues to a process of operating (at block 620) the vapour-compression circuit 400 in the heating mode.

The action of selecting (at block 602) the mode for the vapour-compression circuit 400, 400' may include selecting from the defrost mode, the heating mode and an additional mode. An additional mode may be, for instance, a dormant mode in which working fluid is not circulated within the vapour-compression circuit 400, 400'. If the dormant mode is selected for the vapour-compression circuit 400, the method 600 continues to a process of operating (not shown) the vapour-compression circuit 400 in the dormant mode. In other examples, there may be further operating modes, such as a reverse mode or cooling mode.

Selection (at block 602) of the mode for the vapour-compression circuit 400, 400' may be based on a signal received from a dedicated ice sensor configured to directly monitor a build-up of ice on the surfaces of the evaporator 408. If the signal received from the dedicated ice sensor is indicative of significant and/or excessive ice build-up on the surfaces of the evaporator 408, the defrost mode may be selected for the vapour-compression circuit 400, 400'. The dedicated ice sensor may include an optical sensor configured to measure an opacity and/or an optical refractive index of the surface(s) of the evaporator 408 to determine whether significant and/or excessive ice build-up is present on the surface(s) of the evaporator 408. Additionally or alternatively, selection (at block 602) of the mode for the vapour compression circuit 400, 400' may be based on a signal received from another sensor of or associated with the vapour-compression circuit 400, 400'. The sensor may configured to monitor a parameter which is indirectly indicative of ice build-up on the surfaces of the evaporator 408. The parameter may be, for example, a temperature or a pressure of working fluid at a selected location within the vapour-compression circuit 400, 400' proximal to the evaporator 408. In this example, the controller is configured and the method is conducted such that, if the signal received from the existing sensor is indirectly indicative of significant and/or excessive ice build-up on the surfaces of the evaporator 408, the defrost mode is selected for the vapour-compression circuit 400, 400'. Additionally or alternatively, selection (at block 602) of the mode for the vapour-compression circuit 400, 400' may be based on a signal received from a user-interface communicatively coupled to the controller 490, the user-interface being configured to allow a user to manually choose the mode for the vapour-compression circuit 400. If the defrost mode is not selected for the vapour-compression circuit 400, 400', the heating mode (or an additional mode) may be selected for the vapour-compression circuit, rather than the defrost mode. The heating mode may be selected if there is a demand to provide heating to the climate-controlled compartment 24.

The process of operating (at block 610) the vapour-compression in the defrost mode includes directing (at block 612) working fluid from the compressor 402 to the evaporator 408 via the bypass line 419 and an expansion device (the expansion device 406 of the first example circuit, or the auxiliary expansion device 406' of the second example circuit). The compressor 402 is operated to compress working fluid received from the evaporator 408 via the suction line 418, the bypass line control valve 489 is actuated (at block 613) to permit flow of working fluid through the bypass line 419, and the condenser control valve 484 is actuated (at block 615) to prevent flow of working fluid through the condenser 404. That is, the bypass line control valve 489 is maintained in the open state and the condenser control valve 484 is maintained in the closed state for operation of the vapour-compression circuit 400, 400' in the defrost mode, as shown in FIGs. 2 and 4. By preventing flow of working fluid through the condenser 404, a flow of relatively cool liquid-phase working fluid condensed at the condenser 404 is prevented, thereby preventing such flow migrating into the bypass line 419, the distributor line 416 and/or the suction line 418 is significantly reduced and/or eliminated. This reduces a risk of liquid slugging/ingress to the compressor 402 during operation of the vapour-compression circuit 400, 400' in the defrost mode.

The process of operating (at block 610) the vapour-compression circuit 400, 400' in the defrost mode includes controlling (at block 616) the expansion device 406, 406' which is configured to receive working fluid from the bypass line 419 (i.e., the expansion device 406 of the first example circuit, or the auxiliary expansion device 406' of the second example circuit). As referred to herein, control of the expansion device 406, 406' generally refers to and includes controlling a degree of opening of the expansion device 406 406' so as to control a resistance to flow of working fluid through the expansion device 406, 406', as will be understood by those of ordinary skill in the art. If the vapour-compression circuit 400, 400' comprises a main expansion device 406 and an auxiliary expansion device 406' (as in the second example vapour-compression circuit 400' described with respect to FIGs. 4-5), the action represented by block 616 relates only to control of the auxiliary expansion device 406' rather than control of the main expansion device 406 (which may be separately controlled). Otherwise, if the vapour-compression circuit 400, 400' comprises only a main expansion device 406 (as in the first example vapour-compression circuit 400 described with respect to FIGs. 2-3), the action represented by block 616 relates only to control of the main expansion device 406. Control (at block 616) of the expansion device 406, 406' is generally based on the superheat of working fluid in the suction line 418. As discussed above, the superheat of working fluid in the suction line 418 may be determined based on two signals received from the suction line sensing arrangement 498. In particular, control (at block 616) of the expansion device 406, 406' may be to maintain the superheat of working fluid within the suction line 418 within a defrost mode target superheat range or at a defrost mode target superheat value. Accordingly, in the first example vapour-compression circuit 400, the same expansion device 406 is controlled based on the superheat of working fluid in the suction line 418 in both the defrost mode and the heating mode (for controlling the superheat of refrigerant returned to the compressor). This is associated with a lower part count (e.g., a lower complexity) and/or a lower weight of the vapour-compression circuit 400.

The defrost mode target superheat range may be selected to ensure that the working fluid entering the compressor 402 is substantially or entirely gaseous (to prevent liquid slugging/ingress to the compressor) and to ensure an appropriate amount of heat energy is transferred from the working fluid to ice on the surfaces of the evaporator 408. For this purpose, the defrost mode target superheat range is selected as being a range of positive values, and may generally be between 4 K and 15 K. This may be referred to as positive value superheat management.

The process of operating (at block 610) the vapour-compression circuit 400, 400' in the defrost mode includes an action of evaluating/determining (at block 618) a defrost mode exit criterion. If the defrost mode exit criterion is determined to have not been met, the vapour-compression circuit continues to be operated in the defrost mode, and the action of evaluating/determining (at block 618) the defrost mode exit criterion is repeated, optionally after a predetermined time delay. If the defrost mode exit criterion is determined to have been met, the method includes returning to the action of selecting (at block 602) the mode for the vapour-compression circuit 400, 400', which may generally include selecting the heating mode for the vapour-compression circuit 400, 400' (or an additional mode as discussed above). Accordingly, after the defrost mode exit criterion is determined to have been met, the vapour-compression circuit 400, 400' may be switched from the defrost mode into the heating mode by the controller 490 such that operation of the vapour-compression circuit 400, 400' in the defrost mode is terminated.

Evaluation/determination of the defrost exit mode criterion may be based on a signal received from the suction line sensing arrangement 498, with the signal relating to the temperature of working fluid within the suction line 418. In other words, evaluation/determination of the defrost exit mode criterion may be based on the temperature of working fluid within the suction line 418. In particular, the defrost exit mode criterion may be determined to have been met when the signal received from the suction line sensing arrangement 498 is indicative of the temperature of working fluid in the suction line 418 being at or above a temperature threshold. The temperature threshold may be selected as a temperature value for working fluid discharged from the evaporator 408 to the compressor 402 which is indicative of there being no ice build-up or only an insubstantial ice build-up remaining on the surfaces of the evaporator 408. Specifically, the inventors have found that the temperature of working fluid in the suction line 418 being between 15°C and 20°C is reliably indicative of this. Consequently, the temperature threshold may be selected as being between 15°C and 20°C.

The process of operating (at block 620) the vapour-compression in the heating mode includes directing (at block 622) working fluid from the compressor 402 to the evaporator 408 via the condenser 404 and the expansion device 406 (the main expansion device in the second example circuit). The compressor 402 is operated to compress working fluid received from the evaporator 408 via the suction line 418, the bypass line control valve 489 is actuated (at block 623) to prevent flow of working fluid through the bypass line 419, and the condenser control valve 484 is actuated (at block 625) to permit flow of working fluid through the condenser 404. That is, the bypass line control valve 489 is maintained in the closed state and the condenser control valve 484 is maintained in the open state for operation of the vapour-compression circuit 400, 400' in the heating mode, as shown in FIGs. 3 and 5.

The process of operating (at block 620) the vapour-compression circuit 400, 400' in the heating mode includes controlling (at block 626) the expansion device 406. If the vapour-compression circuit 400, 400' comprises a main expansion device 406 and an auxiliary expansion device 406' (as in the second example vapour-compression circuit 400' described with respect to FIGs. 4-5), the action represented by block 626 relates only to control of the main expansion device 406 rather than control of the auxiliary expansion device 406'. Control (at block 626) of the expansion device 406 is generally based on the superheat of working fluid in the suction line 418. In particular, control (at block 626) of the expansion device 406 may be to maintain the superheat of working fluid within the suction line 418 within a heating mode target superheat range or at a heating mode target superheat value. The heating mode target superheat range may be selected to ensure that the working fluid entering the compressor 402 is substantially gaseous (to prevent liquid slugging/ingress to the compressor). For this purpose, the heating mode target superheat range is selected as being a range of positive values, and may generally be between 1 K and 15 K. The heating mode target superheat range may be different from the defrost mode target superheat range, with the inventors finding that a different superheat in the respective conditions corresponds to satisfactorily reducing the risk of liquid phase working fluid being provided to the compressor.

Following the action of controlling (at block 626) the expansion device 406, the method 600 includes returning to the action of selecting (at block 602) the mode for the vapour-compression circuit 400, 400', which may generally include re-selecting the heating mode or selecting the defrost mode for the vapour-compression circuit 400, 400'. If the defrost mode is selected for the vapour-compression circuit 400, 400', the vapour-compression circuit 400, 400' is switched from the heating mode into the defrost mode such that operation of the vapour-compression circuit 400, 400' in the heating mode is terminated.

In a previously-considered vapour-compression circuit, a direction of flow of working fluid through a comparable evaporator was different in each of a defrost mode and a heating mode. The arrangement(s) of the example vapour-compression circuits described herein are such that a direction of flow of working fluid through the evaporator 408 is the same during operation in both the defrost mode (see block 610) and the heating mode (see block 620). As a result, no complex valve arrangements are required for the purpose of switching a vapour-compression circuit 400, 400' in accordance with the present disclosure between the defrost mode (see block 610) and the heating mode (see block 620), which is associated with a lower complexity and a reduced level of maintenance required for the vapour-compression circuit 400, 400'.

In addition, the arrangement(s) of the example vapour-compression circuits described herein provide that the compressor 402 need not be switched off (e.g., shut-down, deactivated or stopped) in order to facilitate switching the vapour-compression circuit 400, 400' between the defrost mode and the heating mode. On the contrary, the controller 490 may be configured to continuously operate the compressor 402 to compress working fluid as the vapour-compression circuit 400, 400' is switched between the defrost mode (see block 610 of the method 600) and the heating mode (see block 620), or vice versa, according to the selection of the operating mode for the vapour-compression circuit 400, 400' (see block 602). In this way, a total number of start-up procedures and/or a total number of shut-down procedures performed by the compressor 402 during operation of the vapour-compression circuit 400, 400'. In turn, this is associated with reduced wear on the compressor 402 and therefore a reduced probability of compressor failure and/or an extended expected service lifespan of the compressor 402.

The controller(s) described herein may comprise a processor. The controller and/or the processor may comprise any suitable circuity to cause performance of the methods described herein and as illustrated in the drawings. The controller or processor may comprise: at least one application specific integrated circuit (ASIC); and/or at least one field programmable gate array (FPGA); and/or single or multi-processor architectures; and/or sequential (Von Neumann)/parallel architectures; and/or at least one programmable logic controllers (PLCs); and/or at least one microprocessor; and/or at least one microcontroller; and/or a central processing unit (CPU), to perform the methods and or stated functions for which the controller or processor is configured.

The controller or the processor may comprise or be in communication with one or more memories that store that data described herein, and/or that store machine readable instructions (e.g., software) for performing the processes and functions described herein (e.g., determinations of parameters and execution of control routines). The memory may be any suitable non-transitory computer readable storage medium, data storage device or devices, and may comprise a hard disk and/or solid state memory (such as flash memory). In some examples, the computer readable instructions may be transferred to the memory via a wireless signal or via a wired signal. The memory may be permanent non-removable memory or may be removable memory (such as a universal serial bus (USB) flash drive). The memory may store a computer program comprising computer readable instructions that, when read by a processor or controller, causes performance of the methods described herein, and/or as illustrated in the Figures. The computer program may be software or firmware or be a combination of software and firmware.

Except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## Claims

1. A vapour-compression circuit (400, 400') for circulating a working fluid, the vapour-compression circuit comprising a compressor (402), a first heat exchanger (404), an expansion device (406, 406'), a second heat exchanger (408), a discharge line (412), a bypass line (419, 419') and a controller (490), wherein
the discharge line extends from an outlet of the compressor to an inlet of the first heat exchanger;
the vapour-compression circuit is configured to operate in a heating mode (620) in which the first heat exchanger operates as a condenser and the second heat exchanger operates as an evaporator; and
the vapour-compression circuit is configured to operate in a defrost mode (610) in which the working fluid is directed (612) from the compressor to the second heat exchanger via the bypass line and the expansion device, the bypass line extending from the discharge line to bypass the first heat exchanger.

2. The vapour-compression circuit (400, 400') of claim 1, wherein the controller (490) is configured to control (616) the expansion device (406, 406') based on a superheat of working fluid discharged from the second heat exchanger (408) in the defrost mode (610).

3. The vapour-compression circuit (400, 400') of claim 2, wherein the controller (490) is configured to control (616) the expansion device (406, 406') to maintain the superheat of the working fluid discharged from the second heat exchanger (408) within a target superheat range while operating the vapour-compression circuit in the defrost mode (610).

4. The vapour-compression circuit (400, 400') of any preceding claim, wherein the second heat exchanger (408) is exposed to an ambient environment (44) and is configured to facilitate heat exchange between the ambient environment and working fluid circulated by the vapour-compression circuit.

5. The vapour-compression circuit (400) of any preceding claim, wherein
the expansion device is a main expansion device (406);
the vapour-compression circuit comprises a liquid line (414) extending from the first heat exchanger to the main expansion device, and a distribution line (416) extending from the main expansion device to an inlet of the second heat exchanger (408).

6. The vapour-compression circuit (400') of any preceding claim, wherein
the expansion device is an auxiliary expansion device (406');
the vapour-compression circuit comprises a main expansion device (406), a liquid line (414) extending from the first heat exchanger to the main expansion device, and a distribution line (416) extending from the main expansion device to an inlet of the second heat exchanger (408).

7. The vapour-compression circuit (400, 400') of both claim 2 and claim 5 or both claim 2 and claim 6, wherein the controller (490) is configured to control (616) the main expansion device (406) based on the superheat of working fluid discharged from the second heat exchanger (408) in the heating mode (620).

8. The vapour-compression circuit (400, 400') of any preceding claim, comprising a bypass line control valve (489), wherein
the bypass line control valve is configured to control flow of working fluid through the bypass line (419, 419'); and
the controller (490) is configured to actuate (615) the bypass line control valve to permit flow of working fluid through the bypass line for operation of the vapour-compression circuit in the defrost mode (610).

9. The vapour-compression circuit (400, 400') of any preceding claim, comprising a condenser control valve (484) configured to prevent working fluid circulating along a path including the first heat exchanger (404) in a closed state, wherein the condenser control valve is disposed at a location to permit circulation of working fluid along a path including the bypass line (419, 419') and the compressor (402) when in the closed state.

10. The vapour-compression circuit (400, 400') of both claim 8 and claim 9, wherein the controller (490) is configured to:
maintain (613) the condenser control valve (484) in the closed state while operating the vapour-compression circuit in the defrost mode;
maintain (623) the condenser control valve in an open state while operating the vapour-compression circuit in the heating mode; and/or
actuate (625) the bypass line control valve (489) to prevent flow of working fluid through the bypass line while operating the vapour-compression circuit in the heating mode.

11. The vapour-compression circuit (400, 400') of any preceding claim, wherein the vapour-compression circuit is configured such that a direction of flow of working fluid through the second heat exchanger (408) is the same in both the defrost mode (610) and the heating mode (620).

12. The vapour-compression circuit (400, 400') of any preceding claim, wherein
the controller (490) is configured to switch the vapour-compression circuit from the heating mode (620) to the defrost mode (610); and
the controller is configured to continuously operate the compressor (402) to compress working fluid as the vapour-compression circuit is switched between the defrost mode and the heating mode.

13. The vapour-compression circuit (400, 400') of any preceding claim, wherein the controller (490) is configured to terminate (618) operation of the vapour-compression circuit in the defrost mode (610) based on a signal received from a sensing arrangement (498) relating to a temperature of working fluid discharged from an outlet of the second heat exchanger (408) to an inlet of the compressor (402).

14. The vapour-compression circuit (400, 400') of claim 13, wherein the controller (490) is configured to terminate (618) operation of the vapour-compression circuit in the defrost mode (610) when the signal is indicative of the temperature of working fluid discharged from the outlet of the second heat exchanger (408) to the inlet of the compressor (402) being at or above a temperature threshold, and wherein the temperature threshold is between 15°C and 20°C.

15. A vehicle (10) comprising the vapour-compression circuit (400, 400') of any preceding claim, and optionally wherein: the vehicle comprises a prime mover (602) and the compressor (402) is mechanically coupled to the prime mover; and/or the vehicle comprises an electric motor (602') and the compressor is mechanically coupled to the electric motor.

## Amended claims

### Amended claims in accordance with Rule 137(2) EPC.

1. A vapour-compression circuit (400, 400') for circulating a working fluid, the vapour-compression circuit comprising a compressor (402), a first heat exchanger (404), an expansion device (406, 406'), a second heat exchanger (408), a discharge line (412), a bypass line (419, 419') and a controller (490), wherein
the discharge line extends from an outlet of the compressor to an inlet of the first heat exchanger;
the vapour-compression circuit is configured to operate in a heating mode (620) in which the first heat exchanger operates as a condenser and the second heat exchanger operates as an evaporator; and
the vapour-compression circuit is configured to operate in a defrost mode (610) in which the working fluid is directed (612) from the compressor to the second heat exchanger via the bypass line and the expansion device, the bypass line extending from the discharge line to bypass the first heat exchanger,
wherein the controller is configured to control (616) the expansion device based on a superheat of working fluid discharged from the second heat exchanger in the defrost mode.

2. The vapour-compression circuit (400, 400') of claim 1, wherein the controller (490) is configured to control (616) the expansion device (406, 406') to maintain the superheat of the working fluid discharged from the second heat exchanger (408) within a defrost mode target superheat range while operating the vapour-compression circuit in the defrost mode (610).

3. The vapour-compression circuit (400, 400') of claim 2, wherein the defrost mode target superheat range is between 4 K and 15 K.

4. The vapour-compression circuit (400, 400') of any preceding claim, wherein the second heat exchanger (408) is exposed to an ambient environment (44) and is configured to facilitate heat exchange between the ambient environment and working fluid circulated by the vapour-compression circuit.

5. The vapour-compression circuit (400) of any preceding claim, wherein
the expansion device is a main expansion device (406);
the vapour-compression circuit comprises a liquid line (414) extending from the first heat exchanger to the main expansion device, and a distribution line (416) extending from the main expansion device to an inlet of the second heat exchanger (408).

6. The vapour-compression circuit (400') of any preceding claim, wherein
the expansion device is an auxiliary expansion device (406');
the vapour-compression circuit comprises a main expansion device (406), a liquid line (414) extending from the first heat exchanger to the main expansion device, and a distribution line (416) extending from the main expansion device to an inlet of the second heat exchanger (408).

7. The vapour-compression circuit (400, 400') of claim 5 or claim 6, wherein the controller (490) is configured to control (616) the main expansion device (406) based on the superheat of working fluid discharged from the second heat exchanger (408) in the heating mode (620).

8. The vapour-compression circuit (400, 400') of any preceding claim, comprising a bypass line control valve (489), wherein
the bypass line control valve is configured to control flow of working fluid through the bypass line (419, 419'); and
the controller (490) is configured to actuate (615) the bypass line control valve to permit flow of working fluid through the bypass line for operation of the vapour-compression circuit in the defrost mode (610).

9. The vapour-compression circuit (400, 400') of any preceding claim, comprising a condenser control valve (484) configured to prevent working fluid circulating along a path including the first heat exchanger (404) in a closed state, wherein the condenser control valve is disposed at a location to permit circulation of working fluid along a path including the bypass line (419, 419') and the compressor (402) when in the closed state.

10. The vapour-compression circuit (400, 400') of both claim 8 and claim 9, wherein the controller (490) is configured to:
maintain (613) the condenser control valve (484) in the closed state while operating the vapour-compression circuit in the defrost mode;
maintain (623) the condenser control valve in an open state while operating the vapour-compression circuit in the heating mode; and/or
actuate (625) the bypass line control valve (489) to prevent flow of working fluid through the bypass line while operating the vapour-compression circuit in the heating mode.

11. The vapour-compression circuit (400, 400') of any preceding claim, wherein the vapour-compression circuit is configured such that a direction of flow of working fluid through the second heat exchanger (408) is the same in both the defrost mode (610) and the heating mode (620).

12. The vapour-compression circuit (400, 400') of any preceding claim, wherein
the controller (490) is configured to switch the vapour-compression circuit from the heating mode (620) to the defrost mode (610); and
the controller is configured to continuously operate the compressor (402) to compress working fluid as the vapour-compression circuit is switched between the defrost mode and the heating mode.

13. The vapour-compression circuit (400, 400') of any preceding claim, wherein the controller (490) is configured to terminate (618) operation of the vapour-compression circuit in the defrost mode (610) based on a signal received from a sensing arrangement (498) relating to a temperature of working fluid discharged from an outlet of the second heat exchanger (408) to an inlet of the compressor (402).

14. The vapour-compression circuit (400, 400') of claim 13, wherein the controller (490) is configured to terminate (618) operation of the vapour-compression circuit in the defrost mode (610) when the signal is indicative of the temperature of working fluid discharged from the outlet of the second heat exchanger (408) to the inlet of the compressor (402) being at or above a temperature threshold, and wherein the temperature threshold is between 15°C and 20°C.

15. A vehicle (10) comprising the vapour-compression circuit (400, 400') of any preceding claim, and optionally wherein: the vehicle comprises a prime mover (602) and the compressor (402) is mechanically coupled to the prime mover; and/or the vehicle comprises an electric motor (602') and the compressor is mechanically coupled to the electric motor.
